# EUROPEAN PATENT SPECIFICATION

(11) **EP 0 649 048 B1**
(45) Date of publication and mention of the grant of the patent: **15.03.2000**
(21) Application number: 94202933.1
(22) Date of filing: 11.10.1994
(51) Int. Cl.: G02F 1/136, G02F 1/133

(54) **Non-linear swiching element, display device comprising such a switching element and method of manufacturing**
Nichtlineare Schaltvorrichtung, Anzeigegerät mit einer solchen Vorrichtung und Methode zu ihrer Herstellung
Commutateur non-linéaire, dispositif d'affichage comprenant un tel commutateur et procédé de fabrication

(30) Priority: 19.10.1993 BE 9301107
(43) Date of publication of application: 19.04.1995
(73) Proprietor: Koninklijke Philips Electronics N.V., 5621 BA Eindhoven (NL)
(72) Inventor: van Roosmalen, Alfred Jan, NL-5656 AA Eindhoven (NL); Kuntzel, Jan Hendrik Willem, NL-5656 AA Eindhoven (NL)
(74) Representative: Raap, Adriaan Yde

(56) References cited:
- EP-A- 0 202 150
- PATENT ABSTRACTS OF JAPAN vol. 9, no. 159 (E-326) 4 July 1985 & JP-A-60 037 178 (CITIZEN TOKEI KK) 26 February 1985
- PATENT ABSTRACTS OF JAPAN vol. 10, no. 058 (E-386) 7 March 1986 & JP-A-60 210 881 (CITIZEN TOKEI KK) 23 October 1985
- PATENT ABSTRACTS OF JAPAN vol. 9, no. 131 (E-319) 6 June 1985 & JP-A-60 016 473 (CITIZEN TOKEI KK) 28 January 1985

## Description

The invention relates to a display device comprising an electro-optical medium between two supporting plates which are located opposite each other and whose facing sides are provided with a plurality of column electrodes and row electrodes, respectively, while at least one of the supporting plates is provided with a plurality of picture electrodes which are connected to the row or column electrodes *via* non-linear switching elements, each non-linear switching element comprising a non-linear resistive material between a first and a second electrically conducting layer, the electrically conducting layer located at the side of the electro-optical medium being metallic and separated from the non-linear resistive layer by a metallic protective layer.

Display devices of this type are used, for example, as display panels in measuring equipment, personal computers and television receivers.

The invention also relates to a non-linear switching element and to a method of manufacturing a non-linear switching element.

These non-linear switching elements may not only be used in said display devices but also, for example in circuits for pressure sensors or photosensitive panels.

JP-A-60-016473 shows a non-linear resistance element of a thin film, which is stable and has less variation with time by micro-crystallization of a semiconductor layer of said element. A metallic layer of micro-crystal A1 or the like is provided on the semiconductor layer in order to stabilize the semiconductor layer and to prevent semiconductor deterioration due to an etch process.

EP-A-202 150 shows a non-linear switch element for a flat electro-optic display and the related manufacturing method in which a substrate is provided with a stack of subsequently a first layer of metallic material, a first layer of non-doped amorphous semiconductor material, a layer of doped amorphous semiconductor material, a second layer of non-doped amorphous semiconductor material and a second layer of a metallic material.

JP-A-60-037178 shows a non-linear resistance element for a display device being stable and having a small variation with time by a method wherein a metal layer is formed on a semiconductor layer, and an attack onto the semiconductor layer according to a post-process is checked by covering on the semiconductor layer with a metal layer.

JP-A-60-210881 shows a non-linear resistance element of thin film for display, in which the display quality is improved by increasing the threshold voltage by a method wherein Cr films of 50 - 2,000 Angstrom thickness are interposed between layers in a resistance element having the structure that semiconductor layers showing rectification have been stacked-up in plural layered manner.

EP-A-0 202 092 shows a display comprising a non-linear resistive element with a layer of non-linear resistive material, for example silicon oxide or silicon nitride between a conducting layer and a metal electrode. The metal electrode forms part of the row or column electrodes.

It has been found that the switching elements may exhibit a given leakage current after a period of time at a voltage of 0 V (or a small voltage which is much smaller than the threshold voltage). The picture elements associated with the switching elements lose their charge due to such a leakage current and the written picture contents are not maintained. The effective lifetime of these types of switching elements may thus be limited to 100 hours.

It is an object of the invention to obviate the above-mentioned problem as much as possible.

To this end, the invention provides a display device as defined in claim 1, a non-linear switching element as defined in claim 3, and a manufacturing method as defined in claim 5.

The invention is based on the recognition that, upon later deposition of a conducting layer by means of for example sputtering, the presence of the protective layer prevents locations on the surface of the layer of non-linear resistive material from being damaged in such a way that leakage currents occur at a later stage. To this end the metallic protective layer should be free from pinholes and discontinuities. This can be achieved by means of low-energetic deposition techniques such as, for example sputtering.

An electrically conducting metallic layer can then be provided on the protective layer, which metallic layer may be thicker and may be made of a low-ohmic material so that a satisfactory contact can be realised. Due to the presence of the protective layer, a sputtering energy or a sputtering rate which are higher than those for the protective layer can be used when this metallic conducting layer is being provided.

By providing the electrically conducting layer at a higher sputtering rate (for example, a factor of 5-10 higher), the manufacture may proceed more rapidly. For protecting the underlying layer of non-linear resistive material it is, however, sufficient that this material is contacted by means of a metallic layer which is obtained by using low-energetic deposition techniques. A further display device according to the invention is therefore characterized in that the electrically conducting layer located at the side of the electro-optical medium is provided by means of a low-energetic deposition technique.

If the protective layer comprises a high melting point material such as, for example molybdenum or a molybdenum alloy (for example, Mo-Ta, Mo-Ti, Mo-Si, Mo-Cr, Mo-V, Mo-Nb, Mo-W, Mo-Ta-Ti, Mo-Ta-Si, Mo-Ta-V, *etc.*), material of this protective layer is prevented from diffusing into the layer of non-linear resistive material, for example during subsequent process steps. The thickness of the protective layer is preferably at least 10 nm so as to prevent the occurrence of discontinuities and pinholes in the protective layer. The thickness is further dependent on the sputtering energy which is used when the conducting layer is being provided and is preferably chosen to be smaller than 100 nm (and 80 nm at lower sputtering energies).

The protective layer and a layer of conducting material which is deposited thereon may consist of the same material.

If the protective layer consists of a high melting point material, low melting point materials such as, for example aluminium, copper, silver and nickel-chromium, may alternatively be used for the conducting layer. In particular, low melting point well-conducting metals can be used which would diffuse into the non-linear resistive material at a higher temperature during later process steps if the protective layer of high melting point metal were not used.

Advantageous embodiments are defined in the dependent claims.

These and other aspects of the invention will be apparent from and elucidated with reference to the embodiments described hereinafter.

In the drawings
Fig. 1 is a cross-section of a part of a display device according to the invention,
Fig. 2 is a plan view of a non-linear switching element according to the invention, while
Fig. 3 is a cross-section taken on the line III-III in Fig. 2, and
Fig. 4 shows a non-linear switching element according to the invention during successive stages of manufacture.

The Figures are diagrammatic and not to scale; corresponding elements are generally denoted by the same reference numerals.

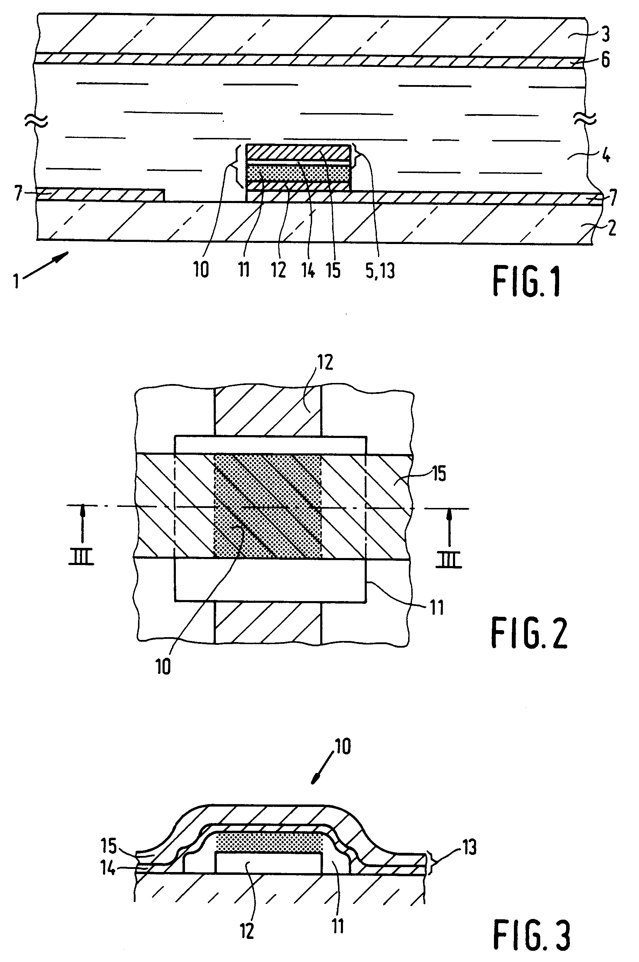

Fig. 1 is a cross-section of a part of a display device 1 according to the invention, for example a liquid crystal display device. Picture electrodes 7 of, for example indium-tin oxide (ITO) are realised on the supporting plate 2. These picture electrodes 7 define picture elements which are driven *via* a non-linear switching element 10 such as, for example a MIM (metal-isolator-metal). To this end the switching elements 10 are interconnected between the picture electrodes 7 and column electrodes 5 which, together with a system of row electrodes 6 drive the picture elements. The row electrodes 6 are present on a further supporting plate 3 which is located opposite the supporting plate 2 and are structured in such a way that, together with the picture electrodes 7 and the interposed electro-optical medium (in this case liquid crystal material 4), they define said picture elements.

The non-linear switching element 10 comprises a conducting layer 12 of, for example chromium. A layer of non-linear resistive material 11 is present between this first conducting layer 12 and a second conducting layer 13. This layer can be formed by means of (P)CVD ((plasma)chemical vapour deposition) or sputtering and may consist of silicon oxide, silicon nitride, silicon oxynitride, silicon carbide, germanium oxide, germanium nitride or germanium carbide. Said materials need not have a stoichiometric composition and are preferably doped with hydrogen. In this example amorphous non-stoichiometric hydrogen-doped silicon nitride (α-Siₓ.N_{y}:H) is used.

According to the invention the conducting layer 13 comprises a thin protective layer 14 of molybdenum having a thickness of approximately 50 nm at the side of the amorphous silicon nitride. This layer has such a thickness (between 10 and 100 nm and preferably between 20 and 80 nm) that the underlying non-linear resistive material can hardly be damaged when a subsequent conducting layer 15 is provided; the thickness of the protective layer 14 is sufficient for obtaining a closed layer which completely covers the underlying non-linear resistive material.

The protective layer 14 is coated with a further conducting layer 15 which, in this example, forms part of a column electrode and, if necessary, may consist of another material, for example aluminium for a satisfactory conductance in the column electrode.

When the same material (molybdenum) is used for the two sub-layers, the conditions during the provision by means of, for example sputtering are different due to the difference in the desired properties (sealing *versus* well- conducting). The two sub-layers then have a different structure, which is visible when using Transmission Electron Microscopy.

Figs. 2 and 3 show a switching element on a glass plate 2. The switching element 10 (the MIM) is located at the area of the crossing of the conductors 12 of, for example chromium and the double layer 13, 14 of molybdenum in so far as there is non-linear resistive material 11 (indicated by dotted areas) at the location of the crossing.

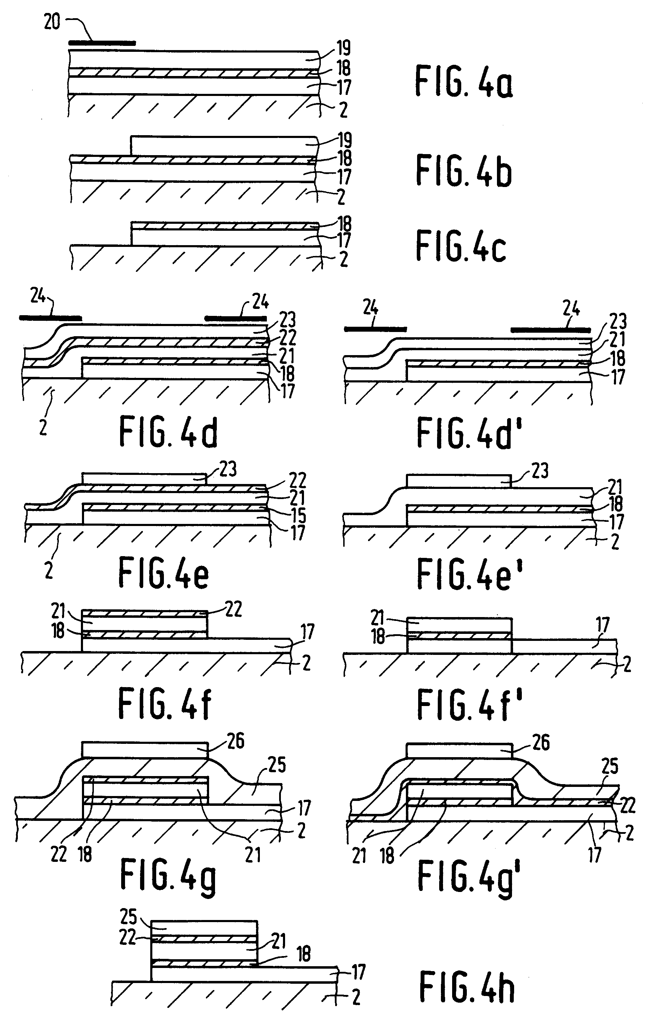

A non-linear switching element 10 in Fig. 1 can be manufactured as follows. The starting material is a supporting plate or substrate 1 of, for example glass or quartz on which a layer 17 of indium-tin oxide (ITO) is deposited, for example by means of sputtering, which layer is in its turn coated with a thin chromium layer 18 of approximately 35 nm which is also provided by means of sputtering. The assembly is subsequently coated with a layer of photoresist 19 on which a mask 20 is provided (Fig. 4a).

The photoresist layer 19 is exposed in patterns by means of the mask 20 and developed so that parts 19 of the photoresist are left behind (Fig. 4b). Said parts function as a mask during the subsequent etching of the chromium layer 18 and the ITO layer 17. This etching treatment is performed in, for example an acidified solution of cerium salt and a hydrochloric acid ferrochloride solution respectively. The device of Fig. 4c is then obtained (defined areas consisting of double layers 17, 18 of ITO and chromium).

Subsequently, the assembly is coated, for example by means of (P)CVD, with a layer 21 of amorphous silicon nitride which is doped with hydrogen (or another non-linear resistive material), on which a thin layer 22, in this example of molybdenum, is deposited. The conditions of providing the layers (temperature, pressure, sputtering parameters such as power and voltage) are such that a dense layer is produced which protects the underlying amorphous silicon nitride from attack of the surface when a subsequent conducting layer is being provided. This layer 22 may be very thin and has a thickness of 50 nm in this example. At a layer thickness of less than 10 nm discontinuities may occur in the layer, while at a layer thickness of more than 100 nm said attack may occur. The layer thickness is preferably in the range between 20 and 80 nm. The assembly is subsequently coated again with a layer of photoresist 23 on which a mask 24 is provided (Fig. 4d).

The photoresist layer 23 is again exposed in patterns by means of the mask 24 and developed so that parts 23 of the photoresist are left behind (Fig. 4e). Said parts function as a mask during the subsequent etching of the molybdenum layer 22 and the layer 21 of amorphous silicon nitride. This etching treatment is performed in, for example a fluorine-containing high frequency plasma, followed by an etching step so as to remove the chromium on the ITO layer at the location of the picture electrodes. The device of Fig. 4f is then obtained.

Subsequently a layer 25 of well-conducting material, preferably of metal and in this example of molybdenum having a thickness of approximately 250 nm is deposited. After patterned parts 26 of photoresist are provided in a similar manner as described hereinbefore (Fig. 4f), the (molybdenum) layer 25 is etched with this photoresist as a mask in, for example a bath based on phosphoric acid. The device of Fig. 4h is then obtained, with an amorphous silicon nitride layer between a conducting layer (lower contact) of a double layer of ITO and chromium and a conducting layer (upper contact) consisting of a layer 25 of molybdenum (in this example). According to the invention, a thin molybdenum layer 22 is present between the layer 25 and the amorphous silicon nitride layer 21. Since the layer 22 protects the underlying amorphous silicon nitride from detrimental influences of sputtering at a higher energy, the layer 25 can be provided at a higher energy, *i.e.* at higher sputtering rates. The sputtering rate may be raised, for example by a factor of 5 to 10 so as to expedite manufacture. However, it is not strictly necessary to raise the energy, because the amorphous silicon remains protected when a thicker layer 22 is provided at a low deposition energy, while, dependent on the application, the layer 22 is sufficient as an electric contact layer.

The molybdenum layer 22 may alternatively be provided after silicon nitride 21 has been deposited (Fig. 4d') and patterned (Figs. 4e', 4f'). First, the thin molybdenum layer 22 and then the layer 25 are deposited on the defined areas 21, while different deposition conditions (sputtering parameters) can be chosen for the two sub-layers. The double layer thus obtained is then again patterned photolithographically.

The invention is of course not limited to the example shown, but several variations are possible within the scope of the attached claims. For example, the column electrode 15 may be present next to the picture electrode 7, in which case the protective layer 14 is present on the non-linear resistive material and extends below the column electrode. As has been stated, variations are also possible in the composition of the non-linear resistive material as well as in the manufacturing methods and the etchants and process parameters used.

## Claims

1. A display device (1) comprising an electro-optical medium (4) between two supporting plates (2,3) which are located opposite each other and whose facing sides are provided with a plurality of column electrodes and row electrodes (5,6), respectively, while at least one of the supporting plates is provided with a plurality of picture electrodes (7) which are connected to the row or column electrodes (5,6) *via* non-linear switching elements (10), each non-linear switching element (10) comprising a non-linear resistive material (11) between a first (12) and a second (13) electrically conducting layer, the electrically conducting layer located at the side of the electro-optical medium (13) being metallic and separated from the non-linear resistive layer (11) by a metallic protective layer (14), characterized in that the metallic protective layer (14) comprises a high melting point material chosen out of the group of molybdenum, tungsten, tantalum, titanium or alloys thereof, applied by a low-energetic deposition technique so as to form a closed layer arranged to protect the underlying non-linear resistive material (11) during the provision of the second conductive layer (13).

2. A display device (1) as claimed in Claim 1, characterized in that the metallic protective layer (14) has a thickness of between 10 nm and 100 nm.

3. A non-linear switching element (10) comprising a non-linear resistive material (11) between a first (12) and a second (13) electrically conducting layer, said second electrically conducting layer (13) being metallic and separated from the non-linear resistive layer (11) by a metallic protective layer (14), characterized in that the metallic protective layer (14) comprises a high melting point material material chosen out of the group of molybdenum, tungsten, tantalum, titanium or alloys thereof, applied by a low-energetic deposition technique so as to form a closed layer arranged to protect the underlying non-linear resistive material (11) during the provision of the second conductive layer (13).

4. A non-linear switching element (1) as claimed in Claim 3, characterized in that the metallic protective layer (14) has a thickness of between 10 nm and 100 nm.

5. A method of manufacturing, on a substrate (2), a non-linear switching element (10) provided with a layer of non-linear resistive material (11) between a first (12) and a second (13) electrically conducting layer, the method comprising:
provision of the first electrically conducting layer (12) on the substrate (2);
depositing a layer of the non-linear resistive material (11) deposited at least on the first conducting layer (12);
providing a metallic protective layer (14) on the layer of non-linear resistive material (11); and
depositing a second layer (13) of electrically conducting material on the metallic protective layer (14), characterized in that the metallic protective layer (14) comprises a high melting point material material chosen out of the group of molybdenum, tungsten, tantalum, titanium or alloys thereof, applied by a low-energetic deposition technique so as to form a closed layer arranged to protect the underlying non-linear resistive material (11) during the subsequent provision of the second conductive layer (13).

6. A method of manufacturing as claimed in Claim 5, characterized in that the second layer (13) is deposited at a deposition energy which is equal to or larger than that which is used for depositing the metallic protective layer (14).

7. A method as claimed in Claim 6, characterized in that the deposition is performed by means of sputtering and the sputtering rate for the second layer of electrically conducting material (13) is a factor of 5 to 10 higher than that for the metallic protective layer.

## Patentansprüche

1. Wiedergabeanordnung (1) mit einem elektrooptischen Medium (4) zwischen zwei Trägerplatten (2, 3), die gegenüber einander liegen und deren einander zugewandte Seiten mit einer Anzahl Spaltenelektroden bzw. Reihenelektroden (5, 6) versehen sind, während wenigstens eine der Trägerplatten mit einer Anzahl Bildelektroden (7) versehen ist, die über nicht lineare Schaltvorrichtungen (10) mit den Reihen- und Spaltenelektroden (5, 6) verbunden sind, wobei jede nicht lineare Schaltvorrichtung (10) zwischen einer ersten (12) und einer zweiten (13) elektrisch leitenden Schicht ein nicht lineares Widerstandsmaterial (11) hat, wobei die elektrisch leitende Schicht an der Seite des elektrooptischen Mediums (13) metallisch ist und durch eine metallische Schutzschicht (14) gegenüber der nicht linearen Widerstandsschicht (11) isoliert ist, dadurch gekennzeichnet, dass die metallische Schutzschicht (14) Material mit einem hohen Schmelzpunkt aufweist, gewählt aus der Gruppe von Molybdän, Wolfram, Tantal, Titan oder Legierungen daraus, aufgetragen mittels einer niederenergetischen Auftragungstechnik zum Bilden einer geschlossenen Schicht zum Schützen des unterliegenden nicht linearen Widerstandsmaterials (11) während der Auftragung der zweiten leitenden Schicht (13).

2. Wiedergabeanordnung (1) nach Anspruch 1, dadurch gekennzeichnet, dass die metallische Schutzschicht (14) eine Dicke zwischen 10 und 100 nm hat.

3. Nicht lineare Schaltvorrichtung (10) mit einem nicht linearen Widerstandsmaterial (11) zwischen einer ersten (12) und einer zweiten (13) elektrisch leitenden Schicht, wobei die genannte zweite elektrisch leitende Schicht (13) metallisch ist und gegenüber der nicht linearen Widerstandsschicht (11) durch eine metallische Schutzschicht (14) getrennt ist, dadurch gekennzeichnet, dass die metallische Schutzschicht (14) ein Material mit einem hohen Schmelzpunkt aufweist, gewählt aus der Gruppe von Molybdän, Wolfram, Tantal, Titan oder Legierungen daraus, aufgetragen mittels einer niederenergetischen Ablagerungstechnik zum Bilden einer geschlossenen Schicht zum Schützen des unterliegenden nicht linearen Widerstandsmaterials (11) wahrend der Auftragung der zweiten leitenden Schicht (13).

4. Nicht lineare Schaltvorrichtung (1) nach Anspruch 3, dadurch gekennzeichnet, dass die metallische Schutzschicht (14) eine Dicke zwischen 10 nm und 100 nm hat.

5. Verfahren zum auf einem Substrat (2) Herstellen einer nicht linearen Schaltvorrichtung (10) mit einer Schicht aus einem nicht linearen Widerstandsmaterial (11) zwischen einer ersten (12) und einer zweiten (13) elektrisch leitenden Schicht, wobei dieses Verfahren die nachfolgenden Verfahrensschritte umfasst:
- Auftragung der ersten elektrisch leitenden Schicht (12) auf dem Substrat (2);
- Ablagerung einer Schicht aus dem nicht linearen Widerstandsmaterial (11), abgelagert wenigstens auf der ersten leitenden Schicht (12);
- Auftragung einer metallischen Schutzschicht (14) auf der Schicht aus nicht linearem Widerstandsmaterial (11); und
- Ablagerung einer zweiten Schicht (13) aus elektrisch leitendem Material auf der metallischen Schutzschicht (14), dadurch gekennzeichnet, dass die metallische Schutzschicht (14) ein Material aufweist mit einem hohen Schmelzpunkt, gewählt aus der Gruppe von Molybdän, Wolfram, Tantal, Titan oder Legierungen daraus, aufgetragen mit Hilfe einer niederenergetischen Auftragungstechnik zum Bilden einer geschlossen Schicht zum Schützen des unterliegenden nicht linearen Widerstandsmaterials (11) wahrend der nachfolgenden Auftragung der zweiten leitenden Schicht (13).

6. Herstellungsverfahren nach Anspruch 5, dadurch gekennzeichnet, dass die zweite Schicht (13) mit einer Ablagerungsenergie abgelagert wird, die der Energie entspricht, oder größer als dieselbe ist, mit der die metallische Schutzschicht (14) abgelagert wird.

7. Verfahren nach Anspruch 6, dadurch gekennzeichnet, dass die Ablagerung durch Zerstäubung erfolgt und dass die Zerstäubungsrate für die zweite Schicht aus elektrisch leitendem Material (13) um einen Faktor 5 bis 10 höher ist als für die metallische Schutzschicht.

## Revendications

1. Dispositif d'affichage (1) comprenant un milieu électro-optique (4) entre deux plaques de support (2, 3) qui se situent l'une à l'opposé de l'autre et dont les côtés en regard sont pourvus d'une pluralité d'électrodes en colonne respectivement d'électrodes en rangée (5, 6), alors qu'au moins une des plaques de support est pourvue d'une pluralité d'électrodes d'image (7) qui sont connectées aux électrodes en rangée ou en colonne (5, 6) par l'intermédiaire d'éléments commutateurs non linéaires (10), chaque élément commutateur non linéaire (10) comportant un matériau de résistance non linéaire (11) entre une première (12) et une deuxième couche (13) électriquement conductrice, la couche électriquement conductrice située du côté du milieu électro-optique (13) étant métallique et étant séparée de la couche de résistance non linéaire (11) par une couche protectrice métallique (14), caractérisé en ce que la couche protectrice métallique (14) comporte un matériau ayant un point de fusion élevé choisi parmi le groupe de molybdène, de tungstène, de tantale, de titane ou d'alliages de ceux-ci, appliqué par une technique de dépôt à faible énergie de manière à constituer une couche fermée agencée pour protéger le matériau de résistance non linéaire sous-jacent (11) pendant l'application de la deuxième couche conductrice (13).

2. Dispositif d'affichage (1) selon la revendication 1, caractérisé en ce que la couche protectrice métallique (14) présente une épaisseur dans la gamme comprise entre 10 nm et 100 nm.

3. Elément commutateur non linéaire (10) comportant un matériau de résistance non linéaire (11) entre une première (12) et une deuxième (13) couche électriquement conductrice, ladite deuxième couche électriquement conductrice (13) étant métallique et étant séparée de la couche de résistance non linéaire (11) par une couche protectrice métallique (14), caractérisé en ce que la couche protectrice métallique (14) comporte un matériau ayant un point de fusion élevé choisi parmi le groupe de molybdène, de tungstène, de tantale, de titane ou d' alliages de ceux-ci, appliqué par une technique de dépôt à faible énergie de manière à constituer une couche fermée agencée pour protéger le matériau de résistance non linéaire sous-jacent (11) pendant l'application de la deuxième couche conductrice (13).

4. Elément commutateur non linéaire (1) selon la revendication 3, caractérisé en ce que la couche protectrice métallique (14) présente une épaisseur dans la gamme comprise entre 10 nm et 100 nm.

5. Procédé pour fabriquer sur un substrat (2) un élément commutateur non linéaire (10) pourvu d'une couche constituée de matériau de résistance non linéaire (11) entre une première (12) et une deuxième (13) couche électriquement conductrice, le procédé comportant:
l'application de la première couche électriquement conductrice (12) sur le substrat (2);
l'application d'une couche constituée du matériau de résistance non linéaire (11) déposé au moins sur la première couche conductrice (12);
l'application d'une couche protectrice métallique (14) sur la couche constituée de matériau de résistance non linéaire (11); et
le dépôt d'une deuxième couche (23) constituée de matériau électriquement conductrice sur la couche protectrice métallique (14), caractérisé en ce que la couche protectrice métallique (14) comporte un matériau ayant un point de fusion élevé choisi parmi le groupe de molybdène, de tungstène, de tantale, de titane ou d'alliages de ceux-ci, appliqué par une technique de dépôt à faible énergie de manière à constituer une couche fermée agencée pour protéger le matériau de résistance non linéaire sous-jacent (11) pendant l'application subséquente de la deuxième couche conductrice (13).

6. Procédé de fabrication selon la revendication 5, caractérisé en ce que la deuxième couche (13) est déposée avec une énergie de dépôt qui est égale ou supérieure à celle utilisée pour déposer la couche protectrice métallique (14).

7. Procédé selon la revendication 6, caractérisé en ce que le dépôt est réalisé par pulvérisation et en ce que la vitesse de pulvérisation pour la deuxième couche constituée de matériau électriquement conducteur (13) est plus élevée d'un facteur dans la gamme comprise entre 5 et 10 que celle pour la couche protectrice métallique.
